# EUROPEAN PATENT SPECIFICATION

(11) **EP 0 383 394 B1**
(45) Date of publication and mention of the grant of the patent: **15.09.1993**
(21) Application number: 90200316.9
(22) Date of filing: 12.02.1990
(51) Int. Cl.: E04F 21/00

(54) **Tool assembly for use in the cutting of hinge patterns**
Werkzeuganordnung zum Ausschneiden von Scharniersitzen
Assemblage d'outils pour le creusage de logement de paumelles

(30) Priority: 10.02.1989 NL 8900326; 08.06.1989 NL 8901462; 21.09.1989 NL 8902360
(43) Date of publication of application: 22.08.1990
(60) Divisional application: 93200536.6
(73) Proprietor: Boumans, Johannes Adrianes, NL-3405 XK Benschop (NL)
(72) Inventor: Boumans, Johannes Adrianes, NL-3405 XK Benschop (NL)
(74) Representative: Kooy, Leendert Willem

(56) References cited:
- EP-A- 0 318 126
- WO-A-89/04695
- FR-A- 1 570 590
- FR-A- 2 468 386
- FR-A- 2 593 071
- GB-A- 2 191 263
- US-A- 3 150 452
- US-A- 3 203 104

## Description

The invention relates to a tool assembly for use in the cutting of hinge patterns in a door, door-frame, window and/or window-frame, comprising at least one hinge-cutting templet or hinge-milling templet and at least one abutment device. Moreover, the invention relates to a method for transferring hinge positions by means of said tool assembly.

US-A-3,203,104 discloses a tool assembly as described in the precharacterizing part of claim 1 which is designed for cutting at least part of the hinge patterns in e.g. a door jamb and transferring the position thereof to a pertaining door, comprising a couple of sliding legs that are interconnected by means of a pin-and-bore joint. Drill guide bushings are mounted for reciprocal movement along guides between upper and lower abutments fixed thereon. In practice, the known tool assembly is positioned in e.g. a door-frame, using the jamb header as point of reference, while the drill guide bushings are resting on the pertaining lower abutment. In this position the hole for a hinge-mounting plug as well as a concentric counterbore for part of the hinge blades are bored into the door jamb.

Then the tool assembly is removed from the door-frame and positioned on the pertaining door using the upper surface of the door as point of reference, while the drill guide bushings are abutted against the pertaining upper abutments. In this position the hole for a hinge-mounting plug and a concentric counterbore for part of the hinge blades are bored into the door. After the tool assembly has been removed from the door an additional tool is used to mortise the door jamb and the door so as to form a slot for the remaining part of the hinge blades. This known tool assembly is useful for cutting circular recesses for part of the hinge blades in new doors and door-frames and the transfer of the positions thereof, when both those doors and door-frames are yet to be provided with recesses for hinge blades.

FR-A-1,570,590 is related to a tool assembly for cutting hinge patterns for paumelle blades, comprising a guide bar to be arranged alongside the door etc., as well as several cutting templet holders slideable along the guide bar that are to be fastened thereto by means of a nut. A cutting templet is mounted on each cutting templet holder in such a way that it can be turned over 180° from a position in which e.g. a paumelle blade pattern can be cut in a door jamb to an opposite position in which a corresponding paumelle hinge pattern can be cut in a pertaining door after the tool assembly has been placed thereon. This known tool assembly is primarily useful when hinge blade recesses are not present in the door and/or door-frame.

It often occurs, however, that the hinge patterns are already present in the door, etc. and must be taken as point of reference for the hinge pattern in the pertaining door-frame, etc., respectively. This is for instance the case in renovations, in which often only either the door or the door-frame is renewed. Reference can also be made to the present practice and standards according to which new doors and windows are delivered with hinges being already mounted thereon. In all these cases it is necessary to precisely measure the position of an existing hinge or hinge pattern on the door, etc. concerned and to transfer this position exactly to the pertaining door-frame, etc.. The known tool assemblies are not equipped to measure and transfer with such a precision. Therefore, a main object of the invention is to provide a tool assembly as defined in the preamble which is not only suitable for use in the application of new hinge patterns, in both new, untreated doors and pertaining new door-frames, etc., but is also capable of measuring and transferring hinge patterns or positions when starting from existing hinges or hinge patterns.

According to the invention, a tool assembly is provided to be used for cutting hinge patterns in a door, a door-frame, a window and/or a window-frame, comprising a pair of interconnected sliding legs which are to be positioned against the door, the door-frame, the window and/or the window-frame, at least one hinge-pattern-cutting templet for a cutting machine and at least one abutment device for positioning the hinge-pattern-cutting templet at the desired position along the sliding legs, characterized in that the abutment device is adapted to be transferred along the sliding legs and fastened to the sliding legs independently of the hinge-pattern-cutting templet and in that the hinge-pattern-cutting templet is provided with means for its positioning onto the door, etc. independently of the abutment device, said abutment device being provided with abutment surfaces for abutment against a hinge blade as well as against cooperating abutment surfaces provided on the hinge-pattern-cutting templet.

The tool assembly of the invention enables one to exactly measure and transfer the position of existing hinge patterns through the independently movable abutment device, while inaccuracies between hinge blade and abutment device on the one hand and abutment device and cutting templet on the other hand are prevented due to subsequent abutments.

In a preferred embodiment of the tool assembly of the invention the abutment device consists of a clamping piece which is adjustable along the sliding legs and comprises a clamp screw.

Preferably, the hinge-pattern-cutting templet is provided with means for fastening to the door, the door-frame, the window and/or window-frame independently of the sliding legs. According to a further development, the fastening means for the hinge-pattern-cutting templet comprise a clamp screw, a clamp nut, a pressing piece, as well as adjustable abutments for clamping the hinge-pattern-cutting templet to the door, the door-frame, the window and/or the window-frame.

The invention also provides a method for transferring the correct position of hinge patterns in a door and/or window to the pertaining door-frame, and/or window-frame, respectively, wherein a pair of interconnected sliding legs is positioned against the door and/or window, the position of the hinge patterns being set thereon by means of at least one abutment device, said pair of interconnected sliding legs with abutment device fastened therein being removed from the door and/or window and positioned against the pertaining door-frame and/or window-frame respectively, and wherein the hinge-pattern-cutting templet is positioned against the abutment device for cutting the hinge pattern at the correct spot, characterized in that the abutment device is transferred along the sliding legs until an abutment surface thereof abuts against a hinge fastened to the door and/or window and then the abutment device is fixed in position on the sliding legs, and in that after the pair of sliding legs has been set against the pertaining door-frame and/or window-frame, respectively, the hinge-pattern-cutting templet is placed against the abutment surface and is fixed in that position.

The invention is described in more detail in the following specification in view of examples of embodiments thereof to which, however, no restrictive meaning should be attached as within the scope of the invention, as a matter of course, variations and modified embodiments thereof are possible.
Figure 1 is a longitudinal sectional view of the two sliding-legs which the herein proposed tool contains, in their assembled relationship;
figures 2A and 2B show the two sliding legs now detached one from the other, in longitudinal and in end view, and to the right in figure 2A is also seen a bottom view of the upper sliding-leg;
figure 3 shows the mounting-rod which maintains the sliding-legs as represented in figure 2, in their assembled relationship as represented in figure 1, and which is considered detached;
figures 4A and 4B show the abutments for the hinges, which are to be positioned along the tool, in longitudinal view, and in transverse section, respectively;
figures 5A and 5B show adjustable abutments for depth-positioning in the door-frame, and in the door, respectively, viewed from above and from aside;
figure 6 shows a hinge cutting-in jig or templet in front and in lateral view;
figure 7 shows the clamping-nut for the clamp screw of a cutting templet;
figure 8 shows the blocking-strip for maintaining the shortest position of the tool;

In the modern manufacture of doors the hinges are mounted for the half at the same time on the doors. In order to now transfer the location of the hinges from the door to the door-frame, a simple piece of tool is developed, by means of which said operation can be performed.

With this tool a left- as well as a right-turning door can be hung-up. There is also constructed a cutting-jig or templet which can be used for both left- and right-turning doors to transfer the hinge cutting-in pattern to the door frame.

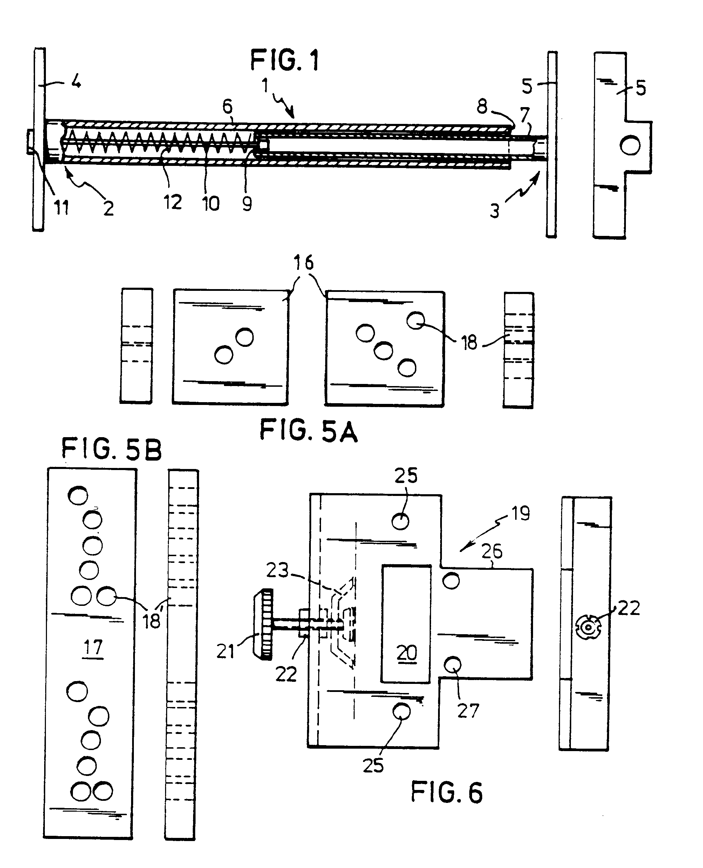

This tool for hanging-up doors - or windows - comprises the slide-assembly 1 as represented in figure 1, which is to be hooked with its sliding-legs 2, 3 on the door to fix thereon the location of the hinges which in the manufacture are mounted on the door, and is then to be hitched onto the door frame in view of transferring the location of the hinges from the door to the door frame.

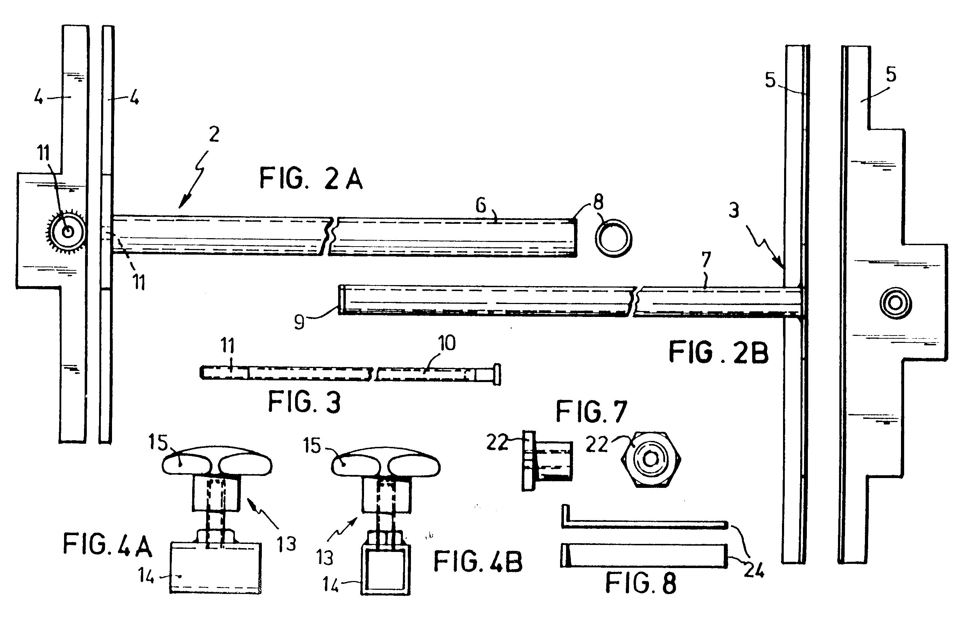

The sliding-legs 2 and 3 which are represented in figure 1 in their assembled relationship, are considered detached in figures 2A and 2B and comprise an upper and a lower fitting-hook 4, and 5, respectively, and guide-legs 6 and 7, respectively, which guide-legs in the embodiment as represented in figures 1 and 2 consist of telescopic tubes. The upper guide-leg 6 has an open end 8 and the therein inserted guide-leg 7 has an end covered by a ring-disc 9, in which ring-disc 9 the mounting-rod 10 as represented in figures 1 and figure 3 is seated, which keeps the sliding-legs 2 and 3 in their assembled relationship as represented in figure 1. The rod is screw-threaded in the fitting-hook 4 at 10 and as seen in figure 1 the slide-adjustment happens under the action of a spring 12 which is seated and tensioned about the mounting-rod 10.

Figures 4A and 4B show an abutment device 13 for the hinges, which as represented consist of a clamping-piece 14 and a clamp screw 15.

Figures 5A and 5B illustrate adjustable abutments 16 and 17 having hole-patterns 18 and 18', respectively, provided therein for the depth-positioning of the hinge pattern with respect to the edge in the door frame and in the door.

The cutting-in pattern jig, indicated at 19 in figure 6, for the hinges is as seen provided with a cutting-in aperture 20 and a clamp screw 21 which is threaded in the clamping-nut 22 which is further represented in figure 7, and by which the pressing-piece 23 is pressed and fixed onto the door frame, while the abutments 16 press against the other side of the door frame.

The use of the tool in the door and in the door frame is further described in the hereafter following part of the specification.

With the pressed-in tool 1 which is blocked by means of the blocking strip 24 the hinges which are already mounted on the doors are measured.

The tool 1 is hooked with the fitting-hook 4 on the upper side of the door. The abutment devices 13 which are already slid on the sliding-leg 2, are now pressed against the upper side of the hinges and fixed one by one on the sliding-leg 2 by means of the clamp screw 15. Thereby the correct height and spacing with respect to the upper side of the door is determined of the cutting pattern which is to be made in the door frame.

The tool 1 is now removed from the door, the blocking strip 24 is disengaged and the tool 1 can now be hitched into the door frame. This happens by means of the compression spring 12.

With the tool 1 now clamped inbetween the lintel and threshold the cutting-pattern, can be arranged in the door frame.

This is done in the following manner. On the templet 19 the abutments 16 are positioned with the hole-pattern 18 at the correct depth, with respect to the door frame edge and aligned with holes 25 and thereafter the templet 19 is pressed with the abutment 26 against the lower side of the abutment device 13 and by means of the clamp screw 21, and abutments 16 the templet is fixedly clamped in the door frame.

After this operation, with the aid of a head cutter, the hinge pattern is transferred by means of the pattern 20 which is arranged in the templet 19, into the door frame. This is done for each subsequent hinge.

With this tool both left- and right-turning doors can be hung-up. The tool 1 has on each side a fitting-hook; one side is for the right and the other side is for the left.

When the abutment devices 13 are fixed on a round guide-leg as seen in the end view to the right in figure 2A, said abutment devices can be turned 180 degrees so that also the measuring-abutments can be used to the left as well as to the right.

If desired, the tool assembly of the invention can be used if hinge patterns or hinges are arranged neither in the door nor in the door frame.

In order to now arrange the hinge pattern in a door, the adjustable abutment 17 is arranged in the templet 19 with the correct holes 18' on the hole-pattern 27 for the depth-positioning in the door.

Now one can, by clamping the templet 19 on the door, thus between pressing piece 23 and abutment 17, self determining the correct position of the hinge pattern, by means of an end cutter apply the hinge pattern on the door for the two or more hinges.

After the hinge patterns are applied on the door, the hinge patterns can be transferred to the door frame with the aid of the tool 1, as described hereabove.

Finally it is observed that the here represented embodiments of the new tool for hanging-up doors are as a matter of course only meant by way of example and that within the scope of the invention of course modifications and variations are conceivable.

### List of reference numerals

- 1.: assembled tool
- 2.: upper sliding-leg
- 3.: lower sliding-leg
- 4.: upper fitting-hook
- 5.: lower fitting-hook
- 6.: outer guide-leg
- 7.: inner guide-leg
- 8.: telescopic tubes
- 9.: ring-disc
- 10.: mounting-rod
- 11.: fixing-screw for mounting-rod
- 12.: compression-spring
- 13.: abutments for hinges
- 14.: clamping-piece
- 15.: clamp screw
- 16.: adjustable abutment for depth-positioning in the door frame
- 17.: adjustable abutment for depth-positioning in the door
- 18.: hole-pattern for abutment 16
- 18'.: hole-pattern for abutment 17
- 19.: cutting-in templet
- 20.: hole for the cutting-pattern for the templet in the door or the door frame.
- 21.: clamp screw for hitching-in the templet in the door or the door frame.
- 22.: clamping-nut
- 23.: pressing-piece
- 24.: blocking-strip for keeping the tool assembled in the shortest position in connection with the measuring of the hinges in the door
- 25.: hole-pattern for the abutment 16
- 26.: abutment of the templet against the lower side of the measuring-abutments
- 27.: hole-pattern for the abutment 17

## Claims

1. Tool assembly to be used for cutting hinge patterns in a door, a door-frame, a window and/or a window-frame, comprising a pair of interconnected sliding legs which are to be positioned against the door, the door-frame, the window and/or the window-frame, at least one hinge-pattern -cutting templet for a cutting machine and at least one abutment device for positioning the hinge-pattern-cutting templet at the desired position along the sliding legs, **characterized in that** the abutment device (13, 14, 15) is adapted to be transferred along the sliding legs (2, 3) and fastened to the sliding legs independently of the hinge-pattern-cutting templet (19), and in that the hinge-pattern-cutting templet (19) is provided with means (21, 22, 23, 16, 17) for its positioning onto the door, etc. independently of the abutment device (13, 14, 15), said abutment device (13, 14, 15) being provided with abutment surfaces for abutment against a hinge blade as well as against cooperating abutment surfaces (26) provided on the hinge-pattern-cutting templet.

2. Tool assembly as claimed in claim 1, **characterized in that** the abutment device (13, 14, 15) consists of a clamping piece (14) which is adjustable along the sliding legs (2, 3) and comprises a clamp screw (15).

3. Tool assembly as claimed in claim 1 or 2, **characterized in that** the hinge-pattern-cutting templet (19) is provided with means (21, 22, 23, 16, 17) for fastening to the door, the door-frame, the window and/or window-frame, independently of the sliding legs (2, 3).

4. Tool assembly as claimed in claim 3, **characterized in that** the fastening means for the hinge-pattern-cutting templet comprise a clamp screw (21), a clamp nut (22), a pressing piece (23), as well as adjustable abutments (16, 17) for clamping the hinge-pattern-cutting templet to the door, the door-frame, the window and/or the window-frame.

5. Method for transferring the correct position of hinge patterns in a door and/or window to the pertaining door-frame and/or window-frame respectively, wherein a pair of interconnected sliding legs is positioned against the door and/or window, the position of the hinge patterns being set thereon by means of at least one abutment device, said pair of interconnected sliding legs with abutment device fastened thereon being removed from the door and/or window and being positioned against the pertaining door-frame and/or window-frame, respectively, and wherein a hinge-pattern-cutting templet is positioned against the abutment device for cutting the hinge pattern at the correct spot, **characterized in that** the abutment device is transferred along the sliding legs until an abutment surface thereof abuts against a hinge fastened to the door and/or window, and then the abutment device is fixed in position on the sliding legs, and in that, after the pair of sliding legs has been set against the pertaining door-frame and/or window-frame,, respectively, the hinge-pattern-cutting templet is placed against the abutment surface and is fixed in that position.

## Patentansprüche

1. Werkzeuganordnung zum Ausschneiden von Scharniersitzen in einer Tür, einem Türrahmen, einem Fenster und/oder einem Fensterrahmen, umfassend zwei miteinander verbundene Gleitschenkel, die gegen die Tür, den Türrahmen, das Fenster und/oder den Fensterrahmen positioniert werden, mindestens eine Scharniersitz-Schnittmusterschablone für eine Schneidmaschine und mindestens eine Anschlageinrichtung zum Positionieren der Scharniersitz-Schnittmusterschablone in der gewünschten Position längs der Gleitschenkel, dadurch **gekennzeichnet**, daß die Anschlageinrichtung (13, 14, 15) (unabhängig von der Scharniersitz-Schnittmusterschablone (19)) längs der Gleitschenkel (2,3) verlager bar und an den Gleitschenkeln befestigbar ist und daß die Scharniersitz-Schnittmusterschablone (19) mit Mitteln (21, 22, 23, 16, 17) zu ihrer Positionierung an der Tür usw. unabhängig von der Anschlageinrichtung (13, 14, 15) versehen ist, wobei die Anschlageinrichtung (13, 14, 15) mit Anschlagflächen zur Anlage an einem Scharnierblatt sowie an damit zusammenwirkenden Anschlagflächen (26) der Scharniersitz-Schnittmusterschablone versehen ist.

2. Werkzeuganordnung nach Anspruch 1, dadurch **gekennzeichnet**, daß die Anschlageinrichtung (13, 14, 15) aus einem Klemmstück (14) besteht, das längs der Gleitschenkel (2, 3) einstellbar ist und eine Klemmschraube (15) umfaßt.

3. Werkzeuganordnung nach Anspruch 1 oder 2, dadurch **gekennzeichnet**, daß die Scharniersitz-Schnittmusterschablone (19) mit Mitteln (21, 22, 23, 16, 17) zur Befestigung an der Tür, dem Türrahmen, dem Fenster und/oder dem Fensterrahmen unabhängig von den Gleitschenkeln (2, 3) versehen ist.

4. Werkzeuganordnung nach Anspruch 3, dadurch **gekennzeichnet**, daß die Befestigungsmittel für die Scharniersitz-Schnittmusterschablone eine Klemmschraube (21), eine Klemmutter (22), ein Druckstück (23) sowie einstellbare Anschläge (16, 17) umfaßt, um die Scharniersitz-Schnittmusterschablone an der Tür, dem Türrahmen, dem Fenster und/oder dem Fensterrahmen festzuklemmen.

5. Verfahren zur Übertragung der ordnungsgemäßen Position von Scharniersitzen in einer Tür und/oder einem Fenster auf den zugehörigen Türrahmen und/oder den Fensterrahmen, wobei zwei miteinander verbundene Gleitschenkel gegen die Tür und/oder das Fenster positioniert werden, die Position der Scharniersitze mit mindestens einer Anschlageinrichtung daran festgelegt wird, wobei die beiden miteinander verbundenen Gleitschenkel mit der daran befestigten Anschlageinrichtung von der Tür und/oder dem Fenster abgenommen und gegen den zugehörigen Türrahmen und/oder Fensterrahmen positioniert werden und wobei eine Scharniersitz-Schnittmusterschablone gegen die Anschlageinrichtung positioniert wird, um den Scharniersitz an der richtigen Stelle zu schneiden, dadurch **gekennzeichnet**, daß die Anschlageinrichtung längs der Gleitschenkel verlagert wird, bis eine Anschlagfläche derselben an einem an der Tür und/oder dem Fenster befestigten Scharnier anschlägt, woraufhin die Anschlageinrichtung in der Position auf den Gleitschenkeln befestigt wird, und daß, nachdem die beiden Gleitschenkel an dem zugehörigen Türrahmen und/oder Fensterrahmen festgelegt wurden, die Scharniersitz-Schnittmusterschablone an der Anschlagfläche zur Anlage gebracht und in dieser Position festgelegt wird.

## Revendications

1. Assemblage d'outil pour le creusage de logements de penture dans une porte, une huisserie de porte, une fenêtre et/ou une huisserie de fenêtre comprenant une paire de pattes de coulissement reliées entre elles devant être placées contre la porte, l'huisserie de porte, la fenêtre et/ou l'huisserie de fenêtre, au moins un gabarit de creusage de logement de penture pour une machine de creusage et au moins un dispositif de butée pour positionner le gabarit de creusage de logement de penture à la position souhaitée le long des pattes de coulissement, caractérisé en ce que le dispositif de butée (13, 14, 15) est adapté à être transféré le long des pattes de coulissement (2,3) et fixé aux pattes de coulissement indépendamment du gabarit de creusage de logement de penture (19), et en ce que le gabarit de creusage de logement de penture (19) est muni de moyens (21, 22, 23, 16, 17) pour son positionnement sur la porte, etc., indépendamment du dispositif de butée (13, 14, 15), ledit dispositif de butée (13, 14, 15) étant muni de surfaces de butée venant buter contre une lame de penture ainsi que contre des surfaces de butée associées (26) disposées sur le gabarit de creusage de logement de penture.

2. Assemblage d'outil selon la revendication 1, caractérisé en ce que le dispositif de butée (13, 14, 15) consiste en une pièce de serrage (14) qui peut être ajustée le long des pattes de coulissement (2, 3) et comprend une vis de serrage (15).

3. Assemblage d'outil, selon la revendication 1 ou 2, caractérisé en ce que le gabarit de creusage de logement de penture (19) est muni de moyens (21, 22, 23, 16, 17) de fixation à la porte, à l'huisserie de porte, à la fenêtre et/ou à l'huisserie de fenêtre, indépendamment des pattes de coulissement (2, 3).

4. Assemblage d'outil selon la revendication 3, caractérisé en ce que les moyens de fixation destinés au gabarit de creusage de logement de penture comprennent une vis de serrage (21), un écrou de serrage (22), une pièce de compression (23), ainsi que des butées ajustables (16, 17) pour serrer le gabarit de creusage de logement de penture sur la porte, l'huisserie de porte, la fenêtre, et/ou l'huisserie de fenêtre.

5. Procédé pour transférer la position correcte de logements de penture formés dans une porte et/ou une fenêtre, respectivement à l'huisserie de porte et/ou à l'huisserie de fenêtre qui leur correspondent, dans lequel une paire de pattes de coulissement reliées entre elles est placée contre la porte et/ou la fenêtre, la position des logements de penture étant ajustée sur ceux-ci au moyen d'au moins un dispositif de butée, ladite paire de pattes de coulissement reliées entre elles et auxquelles est fixé le dispositif de butée étant retirée de la porte et/ou de la fenêtre et étant respectivement placée contre l'huisserie de porte et/ou l'huisserie de fenêtre correspondantes, et dans lequel un gabarit de creusage de logement de penture est placé contre le dispositif de butée pour creuser le logement de penture à l'emplacement voulu, caractérisé en ce que le dispositif de butée est transféré le long des pattes de coulissement jusqu'à ce qu'une surface de butée de celui-ci vienne buter contre une penture fixée à la porte et/ou à la fenêtre, puis en ce que le dispositif de butée est fixé en position sur les pattes de coulissement et en ce que, après que la paire de pattes de coulissement ait été respectivement ajustée contre l'huisserie de porte et/ou l'huisserie de fenêtre correspondantes, le gabarit de creusage de logement de penture est placé contre la surface de butée et est fixé dans cette position.
